(19) Europäisches Patentamt

European Patent Office

Office européen des brevets

(11) **EP 0 642 287 B1**

(12) **EUROPEAN PATENT SPECIFICATION**

(45) Date of publication and mention
of the grant of the patent:
**21.11.2001  Bulletin 2001/47**

(51) Int Cl.[7]: **H04Q 7/38**

(21) Application number: **93202579.4**

(22) Date of filing: **03.09.1993**

(54) **Method for paging mobile radio telephones**

Anrufverfahren für mobile Funktelefone

Procédé d'appel de téléphones radio-mobiles

(84) Designated Contracting States:
**BE DE ES FR GB IT NL SE**

(43) Date of publication of application:
**08.03.1995   Bulletin 1995/10**

(73) Proprietor: **ALCATEL**
**75008 Paris (FR)**

(72) Inventors:
• **Pequet, Eric Marc Leon Marie**
  **B-6120 Ham-Sur-Heure (BE)**
• **Raes, Serge Casmille Cyrille**
  **B-6942 Lodelinsart (BE)**

(74) Representative:
**Narmon, Gisèle Marie Thérèse et al**
**Alcatel Bell N.V.**
**Intellectual Property Department**
**Francis Wellesplein 1**
**2018 Antwerpen (BE)**

(56) References cited:
**EP-A- 0 428 126**

• **37TH IEEE VEHICULAR TECHNOLOGY
CONFERENCE June 1987 , TAMPA, US pages
560 - 566 XP11432 NAGATA ET AL. 'Control
Techniques and Power Saving Effects of
Intermittent Operation in Radio Units'**

**Description**

The present invention relates to a mobile communication system including a base station and a plurality of mobile stations to each of which control time slots are assigned, said base station including transmission control means which, when data is to be transmitted to a said mobile station, transmits a control message identifying said mobile station during at least one of said control time slots assigned thereto, and each of said mobile stations including receipt control means allowing said mobile station to receive a said control message during said assigned control time slots only.

Such a mobile communication system is already known in the art, e.g. from the published international patent application WO-A-92/09148. Therein the time slots are arranged in frames each of which includes one control time slot which may be assigned to one or more mobile stations and which is referred to in the latter patent application as down-setup slot and hereinafter as paging time slot. When a communication is to be set up from a first mobile station to a second one, the first mobile station transmits a request-for-access signal to the base station of the area wherein the first mobile station is located. This base station thereupon performs a number of administrative tasks constituting a so-called authentication procedure, then allocates a traffic channel to the first mobile station, and finally addresses a register to get the identity of the areas wherein the second mobile station may be located. The base station then informs the base stations of these areas of the fact that a communication is to be set up with this second mobile station. As a consequence the latter base stations then each transmit a paging message within a paging time slot assigned to this second mobile station. When not involved in a communication each mobile station must therefore at least listen for this paging message during the paging time slots assigned to it.

In order to reduce the amount of power consumed by a mobile station not involved in a communication this mobile station is brought in idle mode by disabling its receive and demodulating circuits during time slots which are not paging time slots assigned to it. Furthermore, power may be even more reduced by only assigning to the mobile station one paging time slot every n frames, provided the base station is aware of this and hence knows within which paging time slots this mobile station can be addressed by means of a paging message.

However, when in this case a communication is to be set up to two or more mobile stations to realize a so-called group call, i.e. when all these mobile stations must be addressed by means of paging, then either the time delay for addressing the mobile stations is increased or more than one paging message must be transmitted by the base station thus obviously increasing traffic load. Indeed, when for instance a first mobile station only listens for paging messages once every third frame and a second mobile station listens once every fourth frame, then either one paging message identifying both these first and second mobile stations may be transmitted once every twelfth frame, thus increasing the mentioned time delay, or two paging messages, one identifying the first and the other identifying the second mobile station, may be transmitted, thus increasing traffic load.

An object of the present invention is to provide a mobile communication system of the above known type but wherein group calls, i.e. calls to transmit a control message simultaneously to two or more mobile stations, may be performed without additional delay and without increasing traffic load.

According to the invention, this object is achieved due to the fact that said mobile stations are arranged in groups to each of which sets of control time slots are assigned, the sets of a group being ranked in such a way that control time slots of sets of a lower rank also belong to sets of a higher rank, sets of a higher rank having more control time slots than sets of a lower rank, and that said mobile stations include selection means for selecting one of said sets.

In this way, when a group call to a subgroup, i. e. to a number of mobile stations of a same group, has to be performed the base station only has to transmit a control message in a control time slot of the set with the lowest rank of the sets selected by the mobile stations of the subgroup since all other mobile stations of this subgroup have selected a set of equal or higher rank and will therefore also listen for control messages during this same control time slot.

Another characteristic feature of the present invention is that said control time slots are predetermined time slots of a time division multiplexed structure consisting of time slots arranged in frames, and that for each set the number of control time slots in a frame is an integer divider of the total number of control time slots in a frame.

Thus, for each number of control time slots of a set, per frame, the total number of control time slots may be split up in n such sets of control time slots, n being the total number of control time slots per frame divided by this number of control time slots per frame of the set. Thereby, different sets of control time slots may be assigned to different groups of mobile stations so that two mobile stations belonging to different groups of mobile stations may select sets which include a same number of control time slots but which include different control time slots. As a consequence, when to each of these two mobile stations a control message has to be transmitted, e.g. a paging message when at the same time a communication is to be set up to both these mobile stations, these two control messages are transmitted in different control time slots so that collision or an additional time delay for one of the two control messages is avoided.

Still another characteristic feature of the present invention is that the number of control time slots of a set of a higher rank is an integer multiple of the number of control time slots of a set of a lower rank.

Thus the number of control time slots of a set of a first rank may be split up in n subsets of control time slots, n being the number of control time slots of the set of the first rank divided by the number of control time slots in each subset. For different groups of mobile stations the assigned sets of control time slots for the high ranks down until the first rank may then be the same, whilst the assigned sets of control time slots from the second rank on downward are different. Thus, two mobile stations belonging to different ones of these groups of mobile stations may select a same set of control time slots for the high ranks so that no additional delay nor traffic increase incurs in case these two mobile stations are to be called in a group call, whilst only for the low ranks the sets of control time slots differ and either additional delay or traffic increase is incurred.

A further characteristic of the present invention is that said control time slots are predetermined time slots of a time division multiplexed structure consisting of time slots arranged in frames, and that said base station includes a base station control means only allowing it to transmit said control message during predetermined ones of said control time slots per frame.

Thus, the other control time slots may for instance be used to transmit other control information. Another possibility is that different base stations included in the mobile communication system use a same frequency band within which control messages are transmitted, different control time slots then being allocated to different ones of these base stations, i.e. the frequency band is time shared between these different base stations for control.

Another feature of the present invention is that said control time slots are predetermined time slots of a time division multiplexed structure consisting of time slots arranged in frames, and that the number of control time slots of a set is limited to one per n frames, n being an integer.

Thus even lower power consumption of the mobile stations not involved in a communication may be achieved.

Yet a further feature of the present invention is that mobile stations of an administrative class of mobile stations belong to a same said group.

When the mobile stations belong to a same administrative class, i.e. when they have like characteristics and are likely to be called by a group call, then by arranging them in a same group, group calls towards mobile stations of this administrative class are performed without additional delay nor traffic increase.

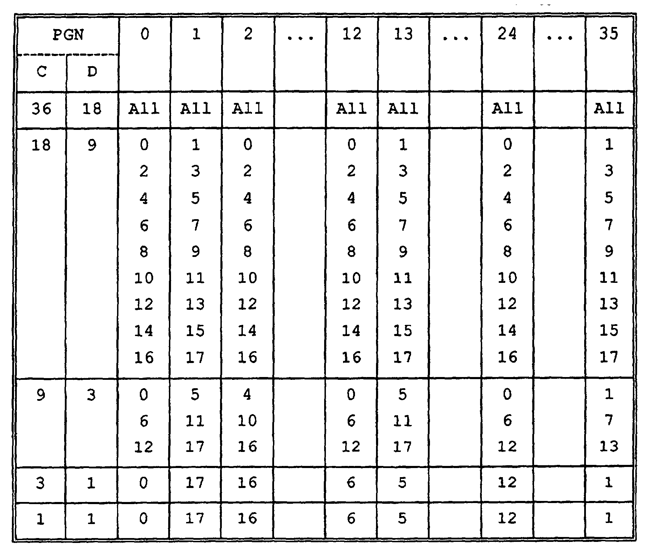

The above mentioned and other objects and features of the invention will become more apparent and the invention itself will be best understood by referring to the following description of an embodiment taken in conjunction with the accompanying drawing which shows for different paging groups PGN and different ranks C associated to mobile stations a table of paging time slots which may be assigned to these mobile stations, and as used in a mobile communication system according to the invention.

It is preliminary noted here that although the invention in general concerns any kind of control message to be transmitted within the mobile communication system, the embodiment described hereinafter is given for paging which is however not to be considered as a limitation of the invention.

The mobile communication system includes a plurality of base stations covering distinct cell areas and a plurality of mobile stations located in these cell areas and each having an own identification number. The base stations each include a transmission control means or paging means, and the mobile stations each include a receipt control means and a selection means. When a communication is to be set up from a first mobile station to a second mobile station, then the first mobile station first transmits a request-for-access signal which is received by the base station of the cell area wherein the mobile station is located. This base station then allocates a traffic channel to the first mobile station and communicates it thereto, and sets up an action to find the location of the second mobile station. This action consists in addressing with the identification number of the second mobile station a data base. This data base then provides a list of base stations with associated cell areas in which the second mobile station may be located. The base station then transmits to these listed base stations and via a backbone network to which all the base stations are connected a message including the identification number of the second mobile station. The paging means of the listed base stations then each transmit a paging message including the identification number of the second mobile station within a paging time slot assigned to the second mobile station in order to thus determine whether this second mobile station is located in its cell area. To be noted that the latter paging time slot may differ from base station to base station. When the second mobile station receives the paging message it transmits a receipt acknowledgement message indicating to the respective base station that it is located in its cell area. The communication may then be further set up by also assigning a traffic channel to the second mobile station and by further control procedures.

To be noted that the request for access, the determination of the cell areas wherein the second mobile station may be located and the further setting up of the communication are no object of the invention and are therefore not described in more detail. Furthermore, it should be clear that the invention is not restricted to calls between mobile stations but is equally applicable to calls from the base station to mobile stations as for instance in case of so-called dispatching.

The above paging message is transmitted by the paging means in a paging time slot of a control channel with a time division multiplexed structure consisting of successive frames of four time slots of which one is a paging time slot. To each mobile station of the mobile communication system a number of paging time slots is assigned as described later, and each of these mobile stations when not involved in a communication listens for paging messages in the paging time slots assigned to it. To this end, each mobile station includes the receipt control means disabling all circuits of the mobile station during the time slots of the control channel which do not constitute assigned paging time slots for this mobile station except for the circuits which keep the mobile station in synchronism with the frame structure of the control channel. Thereby, power consumption of the mobile station is largely reduced. Moreover, in order to further reduce power consumption it is possible to assign not all of the available paging time slots to the mobile station.

The mobile stations located in a same cell area are arranged in so-called paging groups to avoid additional delay or traffic increase in case of a group call, i. e. a call to set up a same communication to two or more mobile stations in a cell area, as will become clear hereafter. Furthermore, the paging time slots are arranged in paging frames each comprising a number of paging time slots equal to the number of paging groups. In the present embodiment the mobile stations are assumed to be arranged in 36 paging groups and a paging frame comprises 36 paging time slots. Each mobile station is allocated to one of the paging groups upon registration in the mobile communication system. Furthermore, to each group a number of sets of paging time slots is assigned and per group these sets are ranked in ranks each indicating a number of paging time slots per paging frame. By means of its selection means a mobile station of a group is able to select either one of these ranks which then indicates the paging time slots assigned to this mobile station as referred to above.

In order to allow some of the paging time slots to be used for other purposes than paging, e.g. for transmitting control information, the number of paging time slots effectively used by the base station for paging may be restricted to less than 36 paging time slots per paging frame. Restricting the number of effectively used paging time slots also provides the possibility of time sharing the control channel between different base stations which then effectively use different paging time slots. In both cases, the number of paging time slots effectively used by a base station is conveniently chosen as a divider of the total number of available paging time slots, i.e. the base station effectively uses one paging time slot every n available paging time slots. In the present embodiment the base station effectively uses 18 of the 36 available paging time slots having the so-called used slot numbers USN 0 to 17. The ranks are also chosen as integer dividers of the number of paging time slots in a paging frame, i.e. of 36, and thus are : 36, 18, 12, 9, 6, 4, 3, 2 or 1. Furthermore, for each mobile station each rank is a divider of each higher rank thus giving several possibilities for the different ranks associated to a mobile station, for instance: 36, 18, 9, 3, 1 or 36, 18, 6, 3, 1 or 36, 12, 4, 2, 1, ... When the selection means of a mobile station selects a rank C of those associated to it whilst being located in a cell area with a base station using only U of N available paging time slots effectively, then the number D of paging time slots per frame within which this mobile station listens for paging messages is equal to the divider of U which is equal to or closest to $C \times \frac{U}{N}$ and which is a divider of the values of D corresponding to higher values of C. When U equals N then D equals C. In the figure an example is given for mobile stations to which the ranks 36, 18, 9, 3 and 1 are associated. To be noted that e.g. for C equal to 9, $C \times \frac{U}{N}$ equals 4.5 whereby D must be equal to 3 since 6 is no divider of the higher value of D equal to 9. When for instance a mobile station belongs to paging group 13 and selects rank C equal to 9, i.e. D is equal to 3, then the paging time slots assigned to this mobile station are those with the used slot number USN equal to 5, 11 and 17. For a paging group with number PGN these used slot numbers USN are given by the following equation.
$$(PGN + USN) \bmod \left(\frac{U}{D}\right) = 0$$

When a same communication is to be set up to different mobile stations of a same paging group a group call is performed, i.e. a paging message is transmitted including information identifying all these mobile stations. This paging message is transmitted in the first occurring paging time slot assigned to the one of these mobile stations having the lowest rank since all the mobile stations to be reached are listening for paging messages during this paging time slot. Indeed, when for instance 7 mobile stations of paging group number 13 are to be paged for a same communication, 3 of these 7 mobile stations having selected rank 36, two having selected rank 18 and two having selected rank 9, and the first occurring used slot number USN is 7, then the paging message is transmitted in the paging time slot with USN equal to 11. As can be seen from the table in the drawing, all of the 7 mobile stations indeed listen for paging messages in this paging time slot.

Mobile stations belonging to a same administrative class of mobile stations, such a class being constituted by mobile stations with like characteristics, are arranged in a same paging group since these mobile stations are likely to be called by a group call. Group calls towards mobile stations of this administrative class are then possible without additional delay nor traffic increase. In order to avoid too many mobile stations from belonging to a same paging group, mobile stations of a same administrative class may also be arranged in different but correlated paging groups, i.e. different paging groups for which the assigned paging time slots for the different ranks are largely the same. Paging groups which are highly correlated are for instance the ones with numbers 0, 6, 12, 18, 24 and 30 whereas for instance paging groups 0 and 2 are slightly correlated and 0 and 1 not at all. To be noted that for instance paging groups 0 and 18 (in general paging groups i and i + 18) are perfectly correlated and thus in fact constitute a same paging group.

Furthermore, the mobile stations should be distributed over the different paging groups as uniformly as possible in order to avoid additional delay at high traffic loads. Indeed, when two different communications to two different mobile stations located in a same cell area are to be set up then two different paging messages must be transmitted by the base station. When the same rank is selected by both mobile stations and when both communications are simultaneously requested, then when the mobile stations both belong to a same paging group an additional delay is incurred. However, when the mobile stations belong to different paging groups this additional delay is not incurred unless for these paging groups for which the above same rank indicates the same assigned paging time slots which is however mainly the case for higher ranks where the additional delay is low, and not for lower ranks with high additional delays. Indeed, when both mobile stations have selected the rank C equal to 9 and the first occurring used slot number USN is equal to 2, then when these mobile stations both belong to paging group 12, the paging messages are transmitted within the paging time slots with USN equal to 6 and 12, whereas when on belongs to paging group 12 and the other to paging group 13, the paging messages are transmitted within the paging time slots with USN equal to 5 and 6.

It should be noted that the rank may also consist of only one assigned paging time slot per n paging frames. In that case a paging multiframe may be considered consisting of M paging frames numbered with paging frame numbers PFN from 0 to M - 1, M being an integer multiple of n. The mobile station will then listen for paging messages during the paging time slots with number USN in the paging frames with number PFN which satisfy the following equation.

$$(PGN + USN + U \times PFN) \text{ modulo } \left(\frac{U}{D}\right) = 0$$

Herein, PGN, U and D are as defined hereinbefore.

More generally, the invention may also be applied where control messages are to be transmitted from mobile stations to a base station, different control time slots then being assigned to mobile stations that are likely to simultaneously transmit control messages, and mobile stations that are likely to transmit such control messages at different times being arranged in a same control group or paging group.

While the principles of the invention have been described above in connection with specific apparatus, it is to be clearly understood that this description is made only by way of example and not as a limitation on the scope of the invention.

## Claims

1. Mobile communication system including a base station and a plurality of mobile stations to each of which control time slots are assigned, said base station including transmission control means which, when data is to be transmitted to a said mobile station, transmits a control message identifying said mobile station during at least one of said control time slots assigned thereto, and each of said mobile stations including receipt control means allowing said mobile station to receive a said control message during said assigned control time slots only, **characterized in that** said mobile stations are arranged in groups to each of which sets of control time slots are assigned, the sets of a group being ranked in such a way that control time slots of sets of a lower rank also belong to sets of a higher rank, sets of a higher rank having more control time slots than sets of a lower rank, and that said mobile stations include selection means for selecting one of said sets.

2. Mobile communication system according to claim 1, **characterized in that** said control time slots constitute paging time slots and that said control message constitutes a paging message.

3. Mobile communication system according to claim 1, **characterized in that** said control time slots are predetermined time slots of a time division multiplexed structure consisting of time slots arranged in frames, and that for each set the number of control time slots in a frame is an integer divider of the total number of control time slots in a frame.

4. Mobile communication system according to claim 1, **characterized in that** the number of control time slots of a set of a higher rank is an integer multiple of the number of control time slots of a set of a lower rank.

5. Mobile communication system according to claim 1, **characterized in that** said control time slots are predetermined time slots of a time division multiplexed structure consisting of time slots arranged in frames, and that said base station includes a base station control means only allowing it to transmit said control message during predetermined ones of said control time slots per frame.

6. Mobile communication system according to claim 4, **characterized in that** the total number of control time slots per frame is an integer multiple of the number of control time slots within which said base station is allowed to transmit said control message.

7. Mobile communication system according to claim 1, **characterized in that** said control time slots are predetermined time slots of a time division multiplexed structure consisting of time slots arranged in frames, and that the number of control time slots of a set is limited to one per n frames, n being an integer.

8. Mobile communication system according to claim 1, **characterized in that** mobile stations of an administrative class of mobile stations belong to a same said group.

9. Paging method for a mobile communication system including a base station and a plurality of mobile stations to each of which paging time slots are assigned, and including the steps of :

 - when data is to be transmitted from said base station to said mobile stations, transmitting a paging message including information identifying said mobile stations within at least one of said paging time slots assigned to said mobile stations; and
 - only allowing said mobile stations to receive a said paging message during said assigned paging time slots;

**characterized in that** it further includes the steps of :

 - grouping said mobile stations in groups; and
 - ranking the mobile stations of a same group in such a way that paging time slots assigned to mobile stations of a lower rank are also assigned to mobile stations of a higher rank, more paging time slots being assigned to mobile stations of a higher rank than to mobile stations of a lower rank.


**Patentansprüche**

1. Mobil-Kommunikationssystem mit einer Basisstation und einer Mehrzahl von Mobilstationen, denen jeweils Steuerzeitschlitze zugeteilt sind, wobei die Basisstation ein Übertragungssteuermittel umfasst, das, wenn Daten an eine der Mobilstationen übertragen werden sollen, eine Steuernachricht, die die Mobilstation identifiziert, während wenigstens eine der dieser zugeteilten Steuerzeitschlitze überträgt, und jede der Mobilstationen ein Empfangssteuermittel umfasst, das es der Mobilstation ermöglicht, eine solche Steuermeldung während nur der zugeteilten Steuerzeitschlitze zu empfangen, **dadurch gekennzeichnet, dass** die Mobilstationen in Gruppen angeordnet sind, denen jeweils Sätze von Steuerzeitschlitzen zugeordnet sind, wobei die Sätze einer Gruppe in einer Rangordnung so geordnet sind, dass Steuerzeitschlitze von Sätzen eines niedrigeren Rangs auch zu Sätzen eines höheren Rangs gehören, Sätze eines höheren Rangs mehr Steuerzeitschlitze als Sätze eines niedrigeren Rangs haben, und dass die Mobilstationen Auswahlmittel zum Auswählen eines der Sätze umfassen.

2. Mobil-Kommunikationssystem nach Anspruch 1, **dadurch gekennzeichnet, dass** die Steuerzeitschlitze Paging-Zeitschlitze darstellen, und dass die Steuernachricht eine Paging-Nachricht darstellt.

3. Mobil-Kommunikationssystem nach Anspruch 1, **dadurch gekennzeichnet, dass** die Steuerzeitschlitze vorgegebene Zeitschlitze einer Zeitmultiplexstruktur sind, die aus in Rahmen angeordneten Zeitschlitzen besteht, und dass für jeden Satz die Anzahl von Steuerzeitschlitzen in einem Rahmen ein ganzzeiliger Teiler der Gesamtzahl von Steuerzeitschlitzen in einem Rahmen ist.

4. Mobil-Kommunikationssystem nach Anspruch 1, **dadurch gekennzeichnet, dass** die Anzahl von Steuerzeitschlitzen eines Satzes eines höheren Ranges ein ganzzahliges Mehrfaches der Anzahl von Steuerzeitschlitzen eines Satzes von niedrigerem Rang ist.

5. Mobil-Kommunikationssystem nach Anspruch 1, **dadurch gekennzeichnet, dass** die Steuerzeitschlitze vorgegebene Zeitschlitze einer Zeitmultiplexstruktur sind, die aus in Rahmen angeordneten Zeitschlitzen besteht, und dass die Basisstation ein Basisstationssteuermittel umfasst, das es ihr nur erlaubt, die Steuernachricht während vorgegebener Zeitschlitze unter den Steuerzeitschlitzen pro Rahmen zu senden.

6. Mobil-Kommunikationssystem nach Anspruch 4, **dadurch gekennzeichnet, dass** die Gesamtzahl von Steuerzeitschlitzen pro Rahmen ein ganzzahliges Mehrfaches der Anzahl von Steuerzeitschlitzen ist, innerhalb derer der Basisstation erlaubt ist, die Steuernachricht zu übertragen.

7. Mobil-Kommunikationssystem nach Anspruch 1, **dadurch gekennzeichnet, dass** die Steuerzeitschlitze vorgegebene Zeitschlitze einer Zeitmultiplexstruktur sind, die aus in Rahmen angeordneten Zeitschlitzen besteht, und dass die Anzahl von Steuerzeitschlitzen eines Satzes auf einen pro n Rahmen begrenzt ist, wobei n eine ganze Zahl ist.

8. Mobil-Kommunikationssystem nach Anspruch 1, **dadurch gekennzeichnet, dass** Mobilstationen einer Verwaltungsklasse von Mobilstationen zu einer gleichen besagten Gruppe gehören.

9. Paging-Verfahren für ein Mobil-Kommunikationssystem mit einer Basisstation und einer Mehrzahl von Mobilstationen, denen jeweils Paging-Zeitschlitze zugeteilt sind, mit den Schritten:

- wenn Daten von der Basisstation an die Mobilstationen übertragen werden sollen, Übertragen einer Paging-Nachricht, die die Mobilstation identifizierende Information umfasst, in wenigstens einem der den Mobilstationen zugeteilten Paging-Zeitschlitze; und
- Erlauben des Empfangs einer solchen Paging-Nachricht durch die Mobilstationen nur während der zugeteilten Paging-Zeitschlitze;

**dadurch gekennzeichnet, dass** es ferner die Schritte umfasst:

- Gruppieren der Mobilstationen in Gruppen; und
- Rangordnen der Mobilstationen einer gleichen Gruppe derart, dass Paging-Zeitschlitze, die Mobilstationen eines niedrigeren Rangs zugeteilt werden, auch Mobilstationen eines höheren Rangs zugeteilt werden, wobei mehr Paging-Zeitschlitze Mobilstationen eines höheren Rangs zugeteilt werden als Mobilstationen eines niedrigeren Rangs.

## Revendications

1. Système de communication radiotéléphonique comprenant une station de base et une pluralité de stations mobiles à chacune desquelles des tranches de temps de contrôle sont attribuées, ladite station de base comprenant des moyens de contrôle de transmission qui, lorsque des données doivent être transmises à une desdites stations mobiles, transmettent un message de contrôle identifiant ladite station mobile pendant au moins une desdites tranches de temps de contrôle qui lui est attribuée, chacune desdites stations mobiles comprenant des moyens de contrôle de réception permettant à ladite station mobile de recevoir un tel message de contrôle uniquement pendant les tranches de temps qui lui sont attribuées, **caractérisé en ce que** lesdites stations mobiles sont disposées dans des groupes, que des jeux de tranches de temps de contrôle sont attribués à chacun d'eux, et que les jeux d'un groupe sont classés par rang de telle façon que les tranches de temps de contrôle des jeux de rang inférieur appartiennent également aux jeux de rang supérieur, les jeux de rang supérieur ayant plus de tranches de temps de contrôle que les jeux de rang inférieur, et que lesdits stations mobiles comprennent des moyens de sélection pour sélectionner un desdits jeux.

2. Système de communication radiotéléphonique selon la revendication 1, **caractérisé en ce que** lesdites tranches de temps de contrôle sont des tranches de temps de recherche de personnes et que ledit message de contrôle est un message de recherche de personnes.

3. Système de communication radiotéléphonique selon la revendication 1, **caractérisé en ce que** lesdites tranches de temps de contrôle sont des tranches de temps prédéterminées d'une structure à multiplexage dans le temps constituée de tranches de temps disposées dans des trames, et que pour chaque jeu, le nombre de tranches de temps de contrôle dans une trame est un diviseur entier du nombre total de tranches de temps de contrôle dans une trame.

4. Système de communication radiotéléphonique selon la revendication 1, **caractérisé en ce que** le nombre de tranches de temps de contrôle d'un jeu de rang supérieur est un multiple entier du nombre de tranches de temps de contrôle d'un jeu de rang inférieur.

5. Système de communication radiotéléphonique selon la revendication 1, **caractérisé en ce que** lesdites tranches de temps de contrôle sont des tranches de temps prédéterminées d'une structure à multiplexage dans le temps constituée de tranches de temps disposées dans des trames, et que ladite station de base comprend des moyens de contrôle de station de base qui ne lui permettent de transmettre ledit message de contrôle que pendant les tranches de temps de contrôle prédéterminées par trame.

6. Système de communication radiotéléphonique selon la revendication 4, **caractérisé en ce que** le nombre total de tranches de temps de contrôle par trame est un multiple entier du nombre de tranches de temps de contrôle dans lesquelles ladite station de base est autorisée à transmettre ledit message de contrôle.

7. Système de communication radiotéléphonique selon la revendication 1, **caractérisé en ce que** lesdites tranches de temps de contrôle sont des tranches de temps prédéterminées d'une structure à multiplexage dans le temps constituée de tranches de temps disposées dans des trames, et que le nombre de tranches de temps de contrôle d'un jeu est limité à une toutes les n trames, n étant un nombre entier.

8. Système de communication radiotéléphonique selon la revendication 1, **caractérisé en ce que** les stations mobiles d'une classe administrative de stations mobiles appartiennent au même groupe.

9. Procédé de recherche de personnes pour un système de communication radiotéléphonique comprenant une station de base et une pluralité de stations mobiles à chacune desquelles des tranches de temps de recherche de personnes sont attribuées, et comprenant les étapes consistant à :

   - lorsque des données doivent être transmises à partir de ladite station de base auxdites stations mobiles, transmettre un message de recherche de personnes contenant les informations identifiant lesdites stations mobiles dans au moins une desdites tranches de temps de recherche de personnes attribuées auxdites stations mobiles ; et
   - ne permettre auxdites stations mobiles de recevoir ledit message de recherche de personnes que pendant lesdites tranches de temps de recherche de personnes attribuées ;

   **caractérisé en ce qu'**il comprend, en outre, les étapes consistant à :

   - disposer lesdites stations mobiles dans des groupes ; et
   - classer les stations mobiles d'un même groupe par rang de telle façon que les tranches de temps de recherche de personnes attribuées aux stations mobiles de rang inférieur soient également attribuées aux stations mobiles de rang supérieur, un plus grand nombre de tranches de temps de recherche de personnes étant attribué aux stations mobiles de rang supérieur qu'aux stations mobiles de rang inférieur.

| PGN | | 0 | 1 | 2 | ... | 12 | 13 | ... | 24 | ... | 35 |
|-----|-----|-----|-----|-----|-----|-----|-----|-----|-----|-----|-----|
| C | D | | | | | | | | | | |
| 36 | 18 | All | All | All | | All | All | | All | | All |
| 18 | 9 | 0 | 1 | 0 | | 0 | 1 | | 0 | | 1 |
| | | 2 | 3 | 2 | | 2 | 3 | | 2 | | 3 |
| | | 4 | 5 | 4 | | 4 | 5 | | 4 | | 5 |
| | | 6 | 7 | 6 | | 6 | 7 | | 6 | | 7 |
| | | 8 | 9 | 8 | | 8 | 9 | | 8 | | 9 |
| | | 10 | 11 | 10 | | 10 | 11 | | 10 | | 11 |
| | | 12 | 13 | 12 | | 12 | 13 | | 12 | | 13 |
| | | 14 | 15 | 14 | | 14 | 15 | | 14 | | 15 |
| | | 16 | 17 | 16 | | 16 | 17 | | 16 | | 17 |
| 9 | 3 | 0 | 5 | 4 | | 0 | 5 | | 0 | | 1 |
| | | 6 | 11 | 10 | | 6 | 11 | | 6 | | 7 |
| | | 12 | 17 | 16 | | 12 | 17 | | 12 | | 13 |
| 3 | 1 | 0 | 17 | 16 | | 6 | 5 | | 12 | | 1 |
| 1 | 1 | 0 | 17 | 16 | | 6 | 5 | | 12 | | 1 |